# EUROPEAN PATENT SPECIFICATION

(11) **EP 2 145 043 B1**
(45) Date of publication and mention of the grant of the patent: **17.07.2013**
(21) Application number: 08737118.3
(22) Date of filing: 28.04.2008
(51) Int. Cl.: D06M 13/00, D06M 10/00, D01F 9/127, C08J 5/18

(54) **METHOD OF INCREASING THE DENSITY OF CARBON NANOTUBE FIBRES OR FILMS**
VERFAHREN ZUM ERHÖHEN DER DICHTE VON CARBONNANORÖHRCHENFASERN ODER FOLIEN
AMÉLIORATION DE LA STRUCTURE ET DES PROPRIÉTÉS DE FIBRES ET FILMS EN NANOTUBES DE CARBONE

(30) Priority: 28.04.2007 GB 0708293
(43) Date of publication of application: 20.01.2010
(60) Divisional application: 12178618.0
(73) Proprietor: Q-Flo Limited, Cambridge CB2 3QZ (GB)
(72) Inventor: KOZIOL, Krzysztof, Kazimiers, Cambridge CB1 8BL (GB); GARCIA, Jose, Vilatela, Puebla 72190 (MX); WINDLE, Alan, Hardwick, Cambridge CB3 0DP (GB); PICK, Martin, Cambridge CB2 3QZ (GB)
(74) Representative: Stuttard, Garry Philip
(86) International application number: PCT/GB2008/001473
(87) International publication number: WO 2008/132467

(56) References cited:
- CN-A- 101 157 564
- XIAOBO ZHANG ET AL: "Spinning and Processing Continuous Yarns from 4-Inch Wafer Scale Super-Aligned Carbon Nanotube Arrays" ADVANCED MATERIALS, WILEY VCH, WEINHEIM, DE, vol. 18, no. 12, June 2006 (2006-06), pages 1505-1510, XP002526895 ISSN: 0935-9648
- LI ET AL: "Densified aligned carbon nanotube films via vapor phase infiltration of carbon" CARBON, ELSEVIER, OXFORD, GB, vol. 45, no. 4, 30 January 2007 (2007-01-30), pages 847-851, XP005865411 ISSN: 0008-6223
- VIGOLO B ET AL: "MACROSCOPIC FIBERS AND RIBBONS OF ORIENTED CARBON NANOTUBES" SCIENCE, AMERICAN ASSOCIATION FOR THE ADVANCEMENT OF SCIENCE, US, WASHINGTON, DC, vol. 290, no. 290, 17 November 2000 (2000-11-17), pages 1331-1334, XP008004074 ISSN: 0036-8075
- DATABASE WPI Week 200412 Thomson Scientific, London, GB; AN 2004-112778 XP002526898 & JP 2003 285300 A (NISSAN MOTOR CO LTD) 7 October 2003 (2003-10-07)
- HUAN LIU ET AL: "Self-Assembly of Large-Scale Micropatterns on Aligned Carbon Nanotube Films" ANGEWANDTE CHEMIE. INTERNATIONAL EDITION, WILEY VCH VERLAG, WEINHEIM, vol. 43, no. 9, 20 February 2004 (2004-02-20), pages 1146-1149, XP002526896 ISSN: 1433-7851
- K KOZIOL ET AL: "High-Performance Carbon Nanotube Fiber" SCIENCE, vol. 318, 21 December 2007 (2007-12-21), pages 1892-1895, XP002526897
- XIN LI ET AL: "The study on controlling the density of Carbon nanotube film" NANO/MICRO ENGINEERED AND MOLECULAR SYSTEMS, 2006. NEMS '06. 1ST IEEE INTERNATIONAL CONFERENCE ON, IEEE, PI, 1 January 2006 (2006-01-01), pages 797-800, XP031063966 ISBN: 978-1-4244-0139-0

## Description

The latter part of the twentieth century witnessed the discovery of the carbon C60 Buckminster Fullerine [H.W. Kroto, J.R. Heat, S. C. O'Brien, R.F. Curl and R. E. Smally, (Nature 318, 162 1985)]. Subsequent investigation of the properties of this new allotrope of carbon led to the identification of carbon nanotubes based on the C6 molecular structure of carbon [S. Ijima Nature 354, 56 1991]. Typically carbon nanotubes have a diameter of 1.0-100 nanometres and aspect ratios ranging from 10/1 to 1000/1. They can be produced in a variety of forms exampled by single walled nanotubes [SWNTs], multiwalled nanotubes [MWNTs] and nanofibres. Carbon nanotubes and nanofibres in their various forms exhibit a multiplicity of remarkable electrical and mechanical properties. The technology surrounding the production of nanotubes and nanofibres is new and challenging and demands constant intellectual innovation.

Carbon nanotubes have immensely promising physical properties. Especially along their long axes they, individually, show remarkable mechanical properties and in some embodiments, electrical conductivity approaching values typical of metals.

Carbon nanotubes can be formed into fibres, the first stage material suitable for subsequent assembly into ropes, wires, fabric, composites, electrical conductors and other forms of fibre bearing materials.

Innovation at the University of Cambridge has resulted in the production of carbon nanotube fibre.

Ref. Production of Agglomerates from Gas Phase. WO/2005/007926, Cambridge University Technical Services Ltd., Kinloch et al.

Via the process described in the above publication continuous lengths of carbon nanotube fibre were produced. Subsequent development of the properties of these fibres has resulted in an enhancement of their mechanical characteristics. This enhancement also provides changes to their electrical profiles. If the output of the production phase for nanotube fibre is collected as a film then similar enhancement can be made.

It is in the domain of nanotube fibre/film improvement that this application exists.

There are various types of process developed to form pure carbon nanotubes into fibres and films. These are:
(A). Spinning from a carpet of carbon nanotubes, that is a mass of carbon nanotubes all grown simultaneously from a substrate so that they have similar lengths and a significant degree of mutual orientation (M. Zhang, KR Atkinson, RH Baughman, Science, 306, (2004), 1358-1361)
(B).Spinning from a liquid crystalline (lyotropic) solution of carbon nanotubes, in a process which has similarities to the spinning of high performance polymer fibres such as aramid fibre. (Ericson LM et al) Science 305 (2004) (pp 1447-1450)
(C). Spinning from an aerogel of carbon nanotubes as they are formed in the (Continuous Vapour Deposition)CVD reaction zone (Y. Li, IA Kinloch, AH Windle). Science 304 (2004) (pp276-278)
(D). Taking composite fibres of carbon nanotubes and removing the matrix material via some chemical or physical method (B. Vigolo, et al). Science 290 (2000) (pp1331-1334).

Pure carbon nanotube fibres are described as containing at least 50% of carbon nanotubes by weight and ideally at least 90% of carbon nanotubes by weight. They contain no other components specifically added during the process by which the carbon nanotubes and/or the fibre/film were formed. A fibre is described as an embodiment in which the largest dimension is at least 100 times that of the smallest and that the two smaller dimensions are either equal or the ratio of the two smaller dimensions is less than that of the two larger. A continuous fibre is described as a fibre at least a meter long.

Pure carbon nanotube films are described as containing at least 50% of carbon nanotubes by weight and ideally at least 90% of carbon nanotubes by weight. They contain no other components specifically added during the process by which the carbon nanotubes and/or the film were formed. A film is described as an embodiment in which the largest dimension is at least 10 times that of the smallest and that the ratio of the two smaller dimensions is less than that of the two larger. A continuous film is described as a film at least a meter long.

Impurities are defined as material which are not well formed nanotubes which can be of a carbonaceous, metallic or non-metallic nature.

Condensation is defined as the increase in nanotube compaction or and/or an increase in the density of a fibre or film. This can also be described as enhancement

Pure carbon nanotube fibre and films have a density less than that which may be considered ideal for industrial use. This shortfall in density is due to the inefficient packing of the individual carbon nanotubes and carbon nanotube structures due to the presence of voids and impurities in the bundles. As a consequence of this shortfall the properties of the fibre/films exampled by fracture stress, elastic modulus, electrical and thermal conductivity are limited.

This invention describes a method by which the properties of carbon nanotube fibres and films are enhanced. These properties include but are not limited to one or more of the following: physical, mechanical, electrical, thermal and optical. In the primary embodiment of the invention the property enhancement is achieved by increasing the density of packing of the carbon nanotubes and carbon nanotube structures within the fibre or film. Material, primarily in the form of impurities can also be removed from the fibre or film.

According to the invention there is provided a method for increasing the packing and thus density of carbon nanotube fibres and films through the application of divinylbenzene to the fibre.

In this invention the fibre or film which has less than its ideal packing density is densified by exposure to divinylbenzene, preferably in the form of a vapour, aerosol or liquid. The primary mechanism of densification is initiated by surface tension forces and results in an increased packing density of the carbon nanotubes and or carbon nanotube structures. This enhancement being achieved either as the result of the addition of the agent or its subsequent removal. Removal can, for example, be affected by diffusion into a liquid or gas or combination. The process may also result in the removal and or chemical modification of impurities for example by dissolution, ablation, vaporisation, melting, explosion or any combination of these. The period of contact between the fibre or film and the agent may vary in time to achieve the desired property modification and to suit the type of agent employed.

On completion of the densification process agent residues may remain on the surface of the fibre or film. This material can have a positive effect in providing a protective layer, a barrier layer or the matrix component for the subsequent formation of a composite material. Further treatment may cause the residual agent to change its physical or chemical form or form a chemical or physical attachment to the carbon nanotube fibre or film. If undesirable the material can be removed.

The application of such electromagnetic radiation can be achieved through the use of known devices particularly lasers. During the application of such electromagnetic radiation carbon nanofibre enhancement is achieved through an increase in density an/or increase in the uniformity of carbon nanofibre alignment.

In one example of the above phenomenon the effect is attributed to ablation of the impurities due to high and rapid absorption of high power electromagnetic energy particularly when using high power laser energy derived from a carbon dioxide device operating in the infrared. The laser application is particularly effective with graphite and metal particles which melt, vaporise or explode.

The invention will be further described with reference to the following drawings.
Fig. 1. Shows an SEM (Scanning Electro Micrograph) of a carbon nanotube fibre before and after condensation.
Fig. 2. Shows a graph of Raman spectra before and after condensation.
Fig. 3. Shows a diagram of the apparatus used to carry out condensation.
Fig. 4. Shows a graph showing the enhancement of the carbon nanotube fibre before and after treatment with divinyl benzene (DVB) and styrene/divinyl benzene.
Fig. 5. shows an apparatus for the irradiation of carbon nanofibre with electromagnetic radiation. A laser is an example of a radiation source.
Fig. 6-8. show SEMs of carbon nanotube fibres before and after irradiation with an electro-magnetic field.
Fig. 9. shows an SEM of a carbon nanotube fibre after high temperature treatment.
Figs. 10-11. show graphs before and after heating to 200 degrees Centigrade.
Figs. 12 -15, show four SEMs of a carbon nanotube film before and after rolling.
Figs. 16-17. show two SEMs of a rolled single fibre and multiple fibre assemblies.
Fig. 18. shows a high magnification image of the uncondensed non-irradiated carbon nanotube fibre.
Fig. 19. shows a SEM of a partially irradiated and condensed/purified carbon nanotube fibre.
Fig. 20. shows an SEM of an irradiated and condensed/purified carbon nanotube fibre.
Figs. 21-23. show SEMs of electromagnetic irradiated/partiallyirradiated/non irradiated carbon nanotube fibre.
Fig. 24. shows a graph of Tensile strength before and after densification.

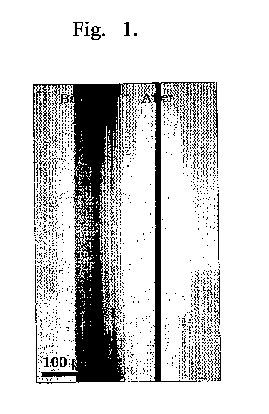

With reference to Fig. 1, the SEM shows a carbon nanotube fibre before and after condensation with a liquid. As can be seen, the width of the fibre following treatment is less than that of the fibre prior to treatment.

In more detail the above experiment, which is not part of the present invention, proceeded as follows. An aerosol of acetone formed with a conventional nozzle atomiser, applying a typical pressure of 6mbar and a liquid flow of ~5mL/min., is applied to as produced fibres. The liquid flow is set perpendicular to the direction of fibre travel for a few seconds on-line. An immediate decrease in the fibre's density to ~0.1 cm⁻³ results, due to surface tension forces at the liquid/fibre interface. Subsequent evaporation of liquid molecules from the fibre induces capillary forces which increase the fibre's density further to greater than 0.1g cm⁻³.

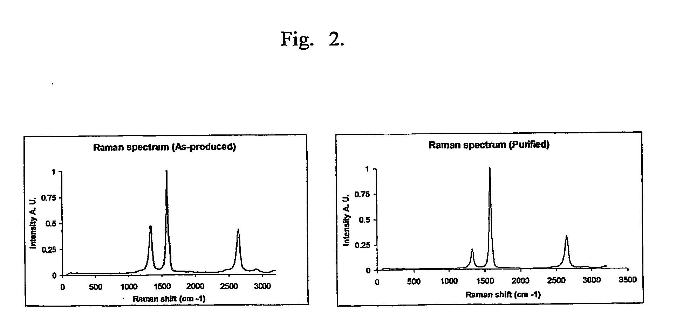

With reference to Fig. 2, the spectra are Raman Spectra of a carbon nanotube fibre maintained in contact with an appropriate liquid while cavitation of the liquid was induced. Cavitation, for example by the application of ultrasound, can induce small regions of high pressure within a liquid. Raman spectroscopy data showed an increase in purity, manifested as a decrease in the ratio of the disorder mode (D) at 1320 cm⁻¹ over the tangential mode (G) at 1580 cm⁻¹.

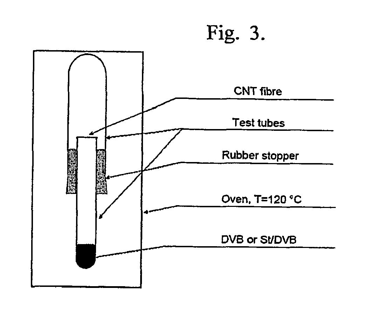

An example of an experimental procedure is shown in Figure 3. In the experiment depicted a carbon nanotube fibre produced by the aerogel described above is mounted over the open end of a test tube. The test tube contains an amount of divinylbenzene. A further test tube having a rubber stopper of suitable size to sealingly retain the test tube is placed over the open end of the test tube. This arrangement is then placed into an oven.

The temperature of the oven is brought up to a temperature of 120C, causing the conversion of the divinylbenzene in the liquid phase to gas phase. The gaseous divinylbenzene therefore reacts with the carbon nanotube fibres and, where the divinylbenzene molecule reacts with separate nanotubes causes the nanotubes to be held together more closely, thereby increasing the density of the fibre.

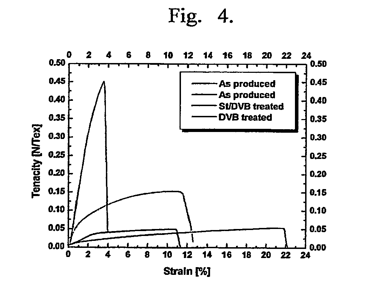

The results of the treatment with divinylbenzene and also with treatment by a styrene/divinylbenzene mixture are shown in Figure 4. In Figure 4, lines 1 and 2 show the performance of an untreated carbon nanotube fibre. Line 3 shows the performance under strain of a carbon nanotube fibre treated with a styrene/divinylbenzene mixture and line 4 shows performance after treatment with divinylbenzene. In the case of the divinylbenzene-treated fibres the tensile strength increased tenfold and the modulus twentyfold. For the styrene/divinylbenzene mixture, the increases were three- and eightfold respectively.

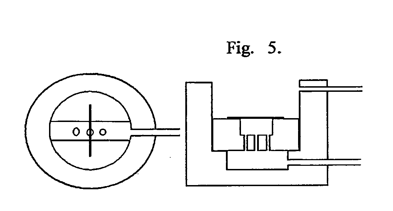

With reference to Fig 5, shown is a diagram of the apparatus for mounting fibres for the electromagnetic radiation - laser treatment..

In a further embodiment of the method, which is not part of the present invention a carbon nanotube fibre is treated with electromagnetic radiation with wavelength between 100nm and 10m and of such intensity that the packing density and or uniformity of arrangement of carbon nanotubes is increased.

Fibre samples were mounted on aluminium stubs as shown in Fig. 5.

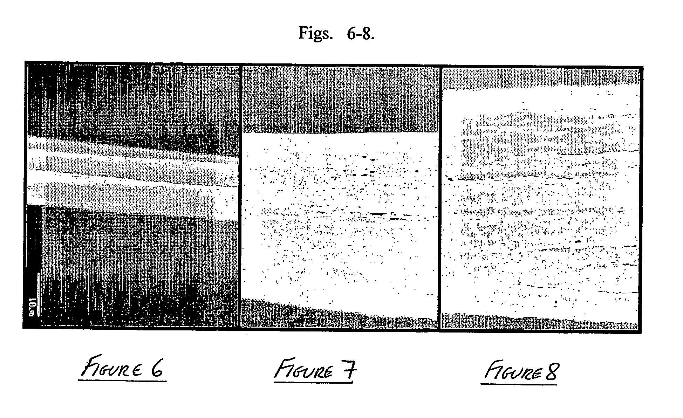

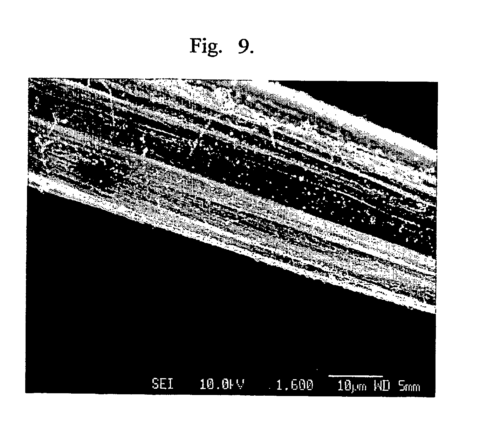

An infrared, 600 W, CO₂, pulsed laser was used with the radiation wavelength of 15 000 nm. Fibres were irradiated for 10, 20, 30, 50 , 100 and 300 ms. Example images of the sample irradiated for 30 ms are shown in Figs 6, 7 and 8 which show the uncondensed, partially and fully condensed fibre. As can be seen in progressing from the fibre in Figure 6 to that in Figure 8, increasing alignment can be seen indicative of closer, more orientated packing. Figure 9 shows the full sequence of the effect illustrated as a composite image.

The SEM images show sections of irradiated/partially irradiated /non-irradiated with the electromagnetic radiation carbon nanotube fibre.

With reference to Fig 9, this SEM shows a carbon nanotube fibre after it has been heat-treated.

The SEM shows a carbon nanotube fibre after it has been heat-treated.

An uncondensed fibre is heated above 1000 degrees centigrade for a few minute, as a result its diameter decreases by a factor of ~50. This SEM shows a fibre compacted solely by the effect of temperature treatment, which is not part of the present invention.

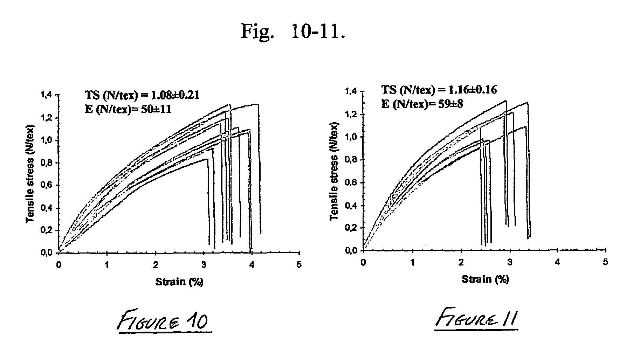

With reference to Figs 10-11, he graphs show the stress-strain curves of fibre asmade (left) and heated to 200°C (right).

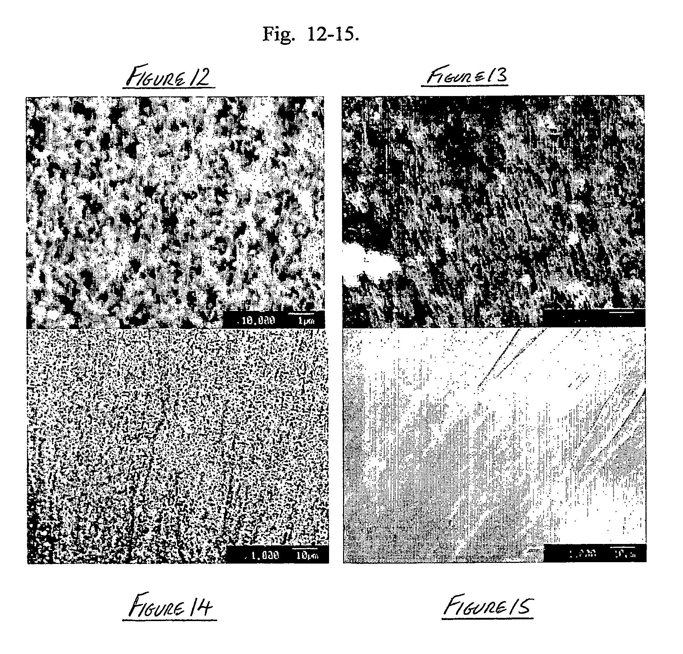

With reference to Figs. 12-15, these show SEMs of carbon nanotube film before and after rolling.

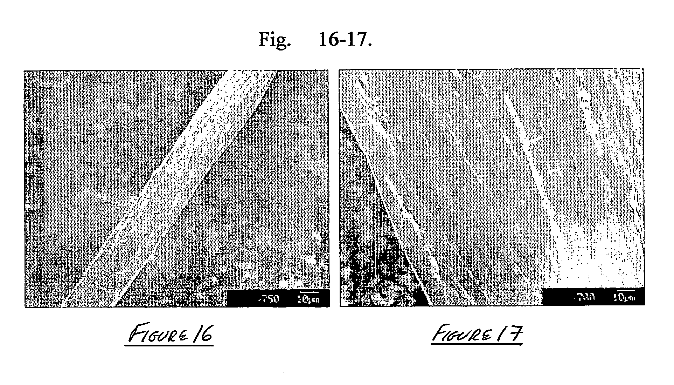

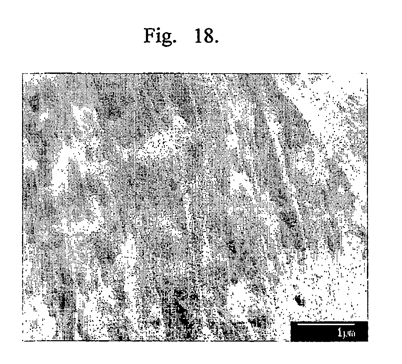

With reference to Fig 17-18, these show SEMs of rolled single fibre and multiple fibre.

In a further embodiment the fibre of film is mechanically compressed and rolled using a rolling mill. The rolling process may or may not be carried out with the presence of a liquid layer on the rolling device which will enhance the densification process. As a result of the rolling process mechanical, electrical and thermal properties of the fibre or film are improved although not necessarily simultaneously removal of impurities or extraneous material which may be of a carbonaceous, metallic or non-metallic nature may occur. This treatment can be effected by hot or cold rollers.

The enhancement of physical properties as described above is attributed to the increase in packing efficiency within the fibrous structure.

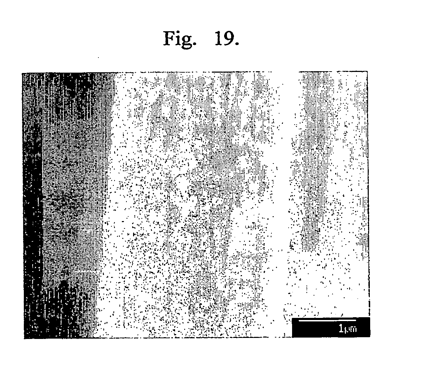

With reference to Fig.19, this SEM shows uncondensed non-irradiated carbon nanotube fibre.

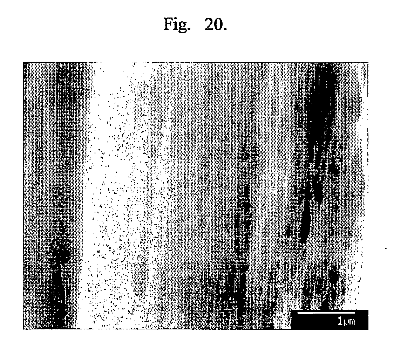

With reference to Fig. 20, this shows high magnification SEM image of the partially irradiated and condensed/purified carbon nanotube fibre..

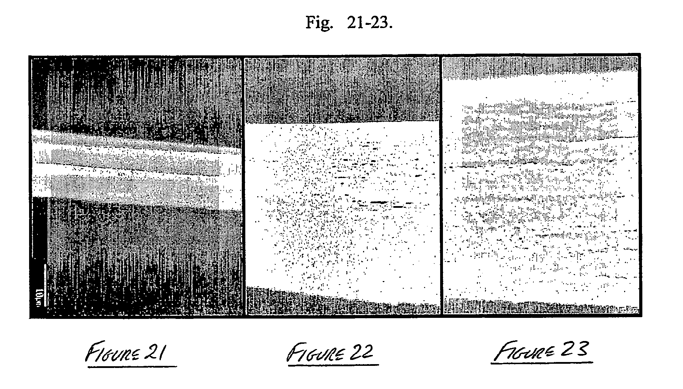

With reference to Figs 21-23, these show SEM images from the sections of irradiated/partially irradiated /non-irradiated with the electromagnetic radiation carbon nanotube fibre..

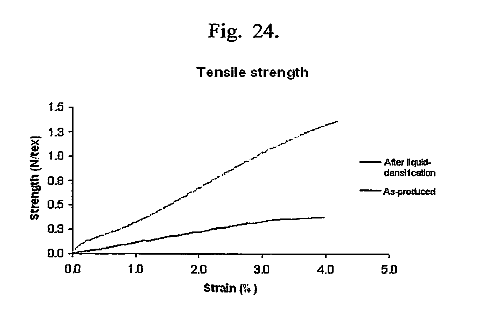

With reference to Fig. 24, this graph shows stress-strain curves of as-produced and densified-with-liquid fibre. The latter has higher strength and stiffness.

## Claims

1. A method of increasing the density of carbon nanotube fibres or films containing carbon nanotubes to at least 50% w/w, said method including the step of exposing the fibre or film to divinylbenzene.

2. A method as claimed in claim 1, wherein divinylbenzene is in vapour form.

3. A method as claimed in claim 1, wherein the residual divinylbenzene is at least partially removed from the fibre or film.

4. A method as claimed in claim 1 wherein the divinylbenzene is in a mixture of divinylbenzene and styrene.

## Patentansprüche

1. Verfahren zur Erhöhung der Dichte von Kohlenstoffnanoröhrenfasern oder -filmen, die Kohlenstoffnanoröhren zu wenigstens 50% G/G enthalten, wobei das Verfahren den Schritt des Aussetzens der Faser oder des Films gegenüber Divinylbenzol umfasst.

2. Verfahren, wie es in Anspruch 1 beansprucht ist, wobei Divinylbenzol in Dampfform ist.

3. Verfahren, wie es in Anspruch 1 beansprucht ist, wobei das restliche Divinylbenzol wenigstens teilweise aus der Faser oder dem Film entfernt wird.

4. Verfahren, wie es in Anspruch 1 beansprucht ist, wobei das Divinylbenzol in einem Gemisch aus Divinylbenzol und Styrol ist.

## Revendications

1. Procédé pour augmenter la densité de fibres ou films en nanotubes de carbone, contenant des nanotubes de carbone en une quantité d'au moins 50 % en poids / poids, ledit procédé comprenant l'étape d'exposition de la fibre ou du film à du divinylbenzène.

2. Procédé suivant la revendication 1, dans lequel le divinylbenzène est sous forme de vapeur.

3. Procédé suivant la revendication 1, dans lequel le divinylbenzène résiduel est éliminé au moins partiellement de la fibre ou du film.

4. Procédé suivant la revendication 1, dans lequel le divinylbenzène est présent dans un mélange de divinylbenzène et de styrène.
